# EUROPÄISCHE PATENTSCHRIFT

(11) **EP 0 319 746 B1**
(45) Veröffentlichungstag und Bekanntmachung des Hinweises auf die Patenterteilung: **05.05.1993**
(21) Anmeldenummer: 88119006.0
(22) Anmeldetag: 15.11.1988
(51) Int. Cl.: F16L 37/12

(54) **Vorrichtung zum gegenseitigen Verbinden von zwei Leitungen, insbesondere Kraftstoffleitungen**
Coupling device for two conduits, in particular for fuel conduits
Dispositif d'accouplement de deux conduites, en particulier pour des conduites de carburant

(30) Priorität: 05.12.1987 DE 3741250
(43) Veröffentlichungstag der Anmeldung: 14.06.1989
(60) Teilanmeldung: 92117356.3
(73) Patentinhaber: Armaturenfabrik Hermann Voss GmbH + Co., 51688 Wipperfürth (DE)
(72) Erfinder: Rösch, Volker, Dr., D-4330 Mülheim (Ruhr) (DE); Goller, Bernd, D-5272 Wipperfürth (DE)
(74) Vertreter: Patentanwälte Dr. Solf & Zapf

(56) Entgegenhaltungen:
- DE-A- 1 936 766
- FR-A- 832 183
- FR-A- 2 230 927
- US-A- 4 398 757

## Beschreibung

Die Erfindung betrifft eine Vorrichtung zum gegenseitigen Verbinden von zwei Rohr-und/oder Schlauchleitungen, insbesondere von zwei Kraftstoffleitungen, bestehend aus einem Verbindungselement mit zwei Anschlußstutzen zum Aufstecken jeweils einer Leitung, wobei das Verbindungselement zweiteilig aus einem Aufnahmeteil und einem Einsteckteil ausgebildet ist und die beiden Teile jeweils einen der beiden Anschlußstutzen sowie das Aufnahmeteil seinem Anschlußstutzen gegenüberliegend eine Aufnahme und das Einsteckteil seinem Anschlußstutzen gegenüberliegend einen Steckabschnitt aufweisen, wobei der Steckabschnitt dichtend in die Aufnahme einsteckbar ist und in der Aufnahme über Rastmittel des Aufnahmeteils und des Einsteckteils lösbar arretiert wird, und wobei die Rastmittel des Aufnahmeteils von axial angeordneten, radial federelastischen, zur Arretierung mit einer verschiebbar auf dem Aufnahmeteil angeordneten Sicherungskappe zusammenwirkenden Rastarmen gebildet sind.

Eine derartige Vorrichtung ist aus der DE-A-1 936 766 bekannt, allerdings ist diese als insbesondere für Gartenschläuche, d.h. für flexible Wasserschläuche, geeignete Steckkupplung ausgebildet. Dies bedeutet, daß diese Steckverbindung ausschließlich für eine ganz bestimmte Leitungsart verwendbar ist, wozu jeder Anschlußstutzen aus einem konischen Stutzen, einem diesen konzentrisch umschließenden Innengewindeabschnitt und einem ringförmigen, in den Innengewindeabschnitt einschraubbaren und dabei mit seiner konischen Innenfläche den Schlauch auf dem konischen Stutzen festklemmenden Klemmstück besteht. Daher müßte die Steckkupplung in dem Fall, daß sie mit einer anderen Leitungsart, z.B. einer starren Rohrleitung, eingesetzt werden soll, gänzlich neu mit an die andere Leitungsart angepaßten Anschlußstutzen konzipiert werden.

Darüber hinaus werden insbesondere im Automobilbau einfache Verbinder verwendet, bei denen ein Verbindungselement üblicherweise aus einem kurzen Rohrstück mit zwei endseitigen Stutzen besteht, auf die jeweils eine Leitung aufsteckbar ist. Zur Sicherung der Verbindung müssen anschließend Schlauchschellen o.dgl. montiert werden. Die Montage der bekannten Vorrichtung erfordert daher relativ viel Zeit, so daß sie sich nur bedingt für die Fließbandproduktion im Automobilbau eignet, wobei insbesondere Kraftstoffleitungen zwischen Tank und Motor möglichst schnell verbunden werden müssen.

Die US-A-4 398 757 beschreibt eine Steckverbindungsvorrichtung für Leitungen, durch die Blut und sonstige sterile Lösungen geführt werden soll. Auch hier ist das Aufnahmeteil mit einem Anschlußstutzen für ausschließlich eine Leitungsart ausgebildet.

Der Erfindung liegt die Aufgabe zugrunde, eine Vorrichtung der gattungsgemäßen Art zu schaffen, die auf besonders einfache und wirtschaftliche Weise für unterschiedliche Arten von Rohr- und/oder Schlauchleitungen ausgelegt werden kann und sich hierdurch insbesondere für die im Automobilbau verwendeten, unterschiedlichen Arten von Kraftstoffleitungen eignet.

Erfindungsgemäß wird dies dadurch erreicht, daß das Aufnahmeteil aus zwei miteinander verbundenen Bauteilen besteht, wobei das erste Bauteil den Anschlußstutzen besitzt und das zweite Bauteil die Rastarme aufweist und die Sicherungskappe trägt. Somit kann vorteilhafterweise die technisch "aufwendigste" Komponente der Verbindungsvorrichtung, d.h. das die Rastarme und die Sicherungskappe aufweisende, zweite Bauteil des Aufnahmeteils, stets gleich ausgebildet sein, während das erste Bauteil des Aufnahmeteils und erforderlichenfalls auch das Einsteckteil jeweils unterschiedlich ausgebildete Anschlußstutzen aufweisen können. Durch die Erfindung wird somit eine Art "Baukastensystem" geschaffen, wobei zur Anpassung an unterschiedliche Leitungsarten die jeweiligen Anschlußstutzen des ersten Bauteils und/oder des Einsteckteils mit dem stets gleichen, zweiten Bauteil des Aufnahmeteils verbunden werden können. Dies ist vor allem auch für die bevorzugte Verwendung der Vorrichtung zum Verbinden von Kraftstoffleitungen im Automobilbau von besonderem Vorteil, weil hier - z.B. von Fahrzeugmodell zu Fahrzeugmodell oder von Hersteller zu Hersteller - unterschiedliche Leitungen verwendet werden. Die erfindungsgemäße Verbindungsvorrichtung kann also auf einfache und kostengünstige Weise und mit geringem Lagerhaltungsaufwand für diese verschiedenen Anwendungsfälle konzipiert werden.

Die an sich bekannte Steckverbindung ermöglichst vorteilhafterweise ein rasches, aber dennoch sicheres Verbinden der beiden Teile des Verbindungselementes, wobei jedes der Teile an einer Leitung vormontiert werden kann, d.h. zum eigentlichen Verbinden der Leitungen kann die Montage der Leitungen an dem Verbindungselement einschließlich der Montage von Schellen oder dergleichen Sicherungsmitteln vorteilhafterweise entfallen. Hierdurch eignet sich die erfindungsgemäße Vorrichtung insbesondere für solche Fälle, in denen es auf ein möglichst schnelles Verbinden von Leitungen ankommt, wie es insbesondere bei der Fließbandproduktion im Automobilbau der Fall ist.

Die erfindungsgemäß vorgesehene Lösbarkeit der Arretierung zwischen den beiden Teilen des Verbindungselementes gestattet auch ein einfaches Öffnen der Verbindung, was z.B. zum Ausbau eines Tanks oder eines Motors erforderlich sein kann. Ein Öffnen von Schellen oder dergleichen, wodurch diese in der Regel unbrauchbar werden (Klemmschellen) und folglich ersetzt werden müßten, kann dabei vorteilhafterweise entfallen. D.h. die Leitungen können stets mit dem Verbindungselement verbunden bleiben.

Weitere vorteilhafte Ausgestaltungsmerkmale der Erfindung sind in den Unteransprüchen sowie der folgenden Beschreibung enthalten.

Anhand von in den beiliegenden Zeichnungen dargestellten Ausführungsbeispielen wird im folgenden die Erfindung näher erläutert. Dabei zeigen:
- Fig. 1: einen Teil-Axialschnitt einer erfindungsgemäßen Verbindungsvorrichtung,
- Fig. 2: einen Schnitt längs der Linie II-II mit Blick in Pfeilrichtung ohne Darstellung einer Sicherungskappe und
- Fig. 3 bis 5: alternative Ausbildungen der erfindungsgemäßen Verbindungsvorrichtung in Axialschnittdarstellungen.

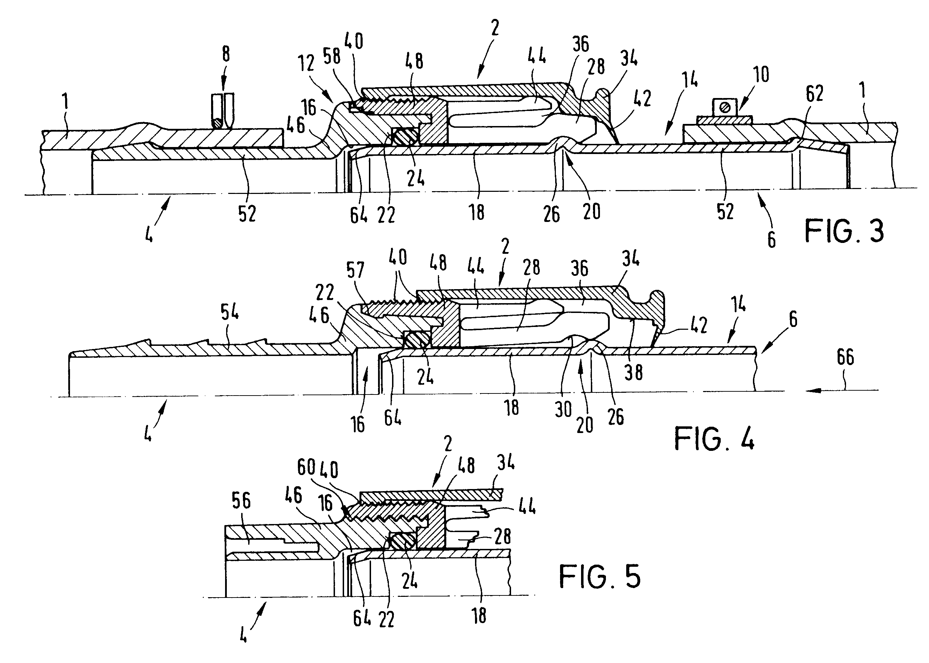

Eine erfindungsgemäße Vorrichtung zum gegenseitigen Verbinden von zwei Rohr- und/oder Schlauchleitungen 1 (siehe Fig. 3) besteht aus einem Verbindungselement 2 mit zwei gegenüberliegenden Anschlußstutzen 4, 6. Zur Montage der Leitungen 1 werden diese z.B. auf jeweils einen der Anschlußstutzen 4, 6 aufgesteckt und mit einer geeigneten Schelle fixiert. In Fig. 3 ist beispielhaft auf der linken Seite eine Drahtfeder-Schelle 8 und auf der rechten Seite eine Schraubschelle 10 angedeutet.

Das Verbindungselement 2 ist zweiteilig aus einem Aufnahmeteil 12 und einem Einsteckteil 14 ausgebildet. Beide Teile 12, 14 weisen jeweils einen der Anschlußstutzen 4, 6 auf. Das Aufnahmeteil 12 weist seinem Anschlußstutzen 4 gegenüberliegend eine Aufnahme 16 und das Einsteckteil 14 seinem Anschlußstutzen 6 gegenüberliegend einen Steckabschnitt 18 auf. Der Steckabschnitt 18 ist dichtend in die Aufnahme 16 einsteckbar und wird in der Aufnahme 16 über Rastmittel 20 lösbar arretiert.

Zur gegenseitigen Abdichtung ist in einer innerhalb der Aufnahme 16 des Aufnahmeteils 12 gebildeten Ringnut 22 ein Dichtring 24 angeordnet, der auf dem eingesteckten Steckabschnitt 18 des Einsteckteils 14 umfänglich dichtend aufliegt.

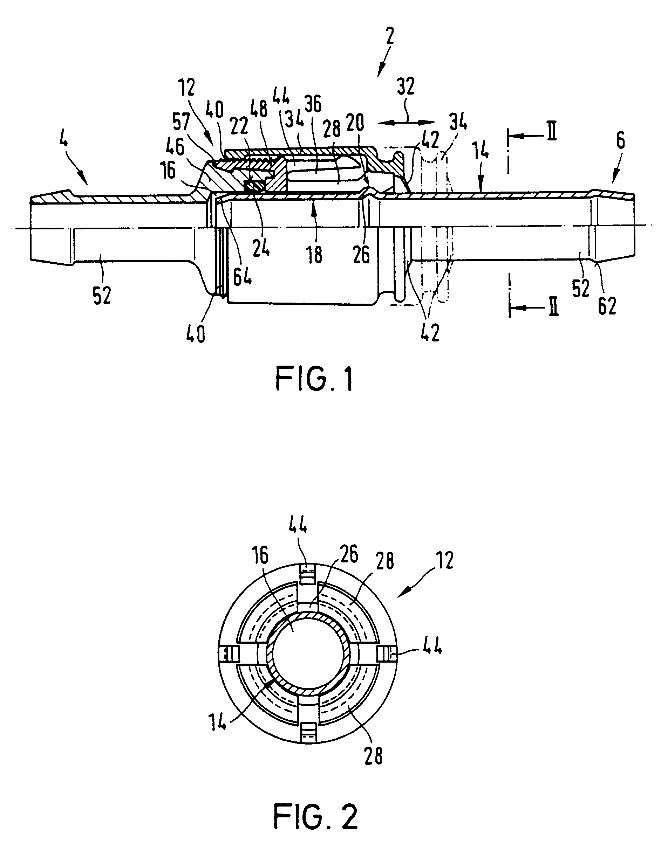

Die Rastmittel 20 sind erfindungsgemäß einerseits durch eine umfängliche Ringwulst 26 am Steckabschnitt 18 des Einsteckteils 14 und andererseits durch axial angeordnete, radial federelastische Rastarme 28 des Aufnahmeteils 12 gebildet. Dabei weisen die Rastarme 28 an ihren freien Enden die Ringwulst 26 des in die Aufnahme 16 eingesteckten Einsteckteils 14 rastend umgreifende Vertiefungen 30 auf (siehe Fig. 4). Wie in Fig. 2 zu erkennen ist, sind vorteilhafterweise vier Rastarme 28 auf den Umfang des Aufnahmeteiles 12 verteilt angeordnet. Vorzugsweise sind die Rastarme 28 einstückig an das Aufnahmeteil 12 angeformt.

Zur Erhöhung der Sicherheit der Arretierung ist es besonders zweckmäßig, wenn das Aufnahmeteil 12 eine zwischen einer Lösestellung und einer Sicherungsstellung in Doppelpfeilrichtung 32 (Fig. 1) axialverschiebliche, im wesentlichen hohlzylinderförmige Sicherungskappe 34 trägt. Diese Sicherungskappe 34 umschließt die Rastarme 28 derart umfänglich, daß die Rastarme 28 in der Lösestellung (Fig. 4) innerhalb eines von der Sicherungskappe 34 umschlossenen Hohlraumes 36 radialbeweglich sind und in der Sicherungsstellung (Fig. 1 und 3) mit ihren freien Enden umfänglich an einer sich axial an den Hohlraum 36 anschließenden Arretierungs-Ringfläche 38 (insbesondere Fig. 4) der Sicherungskappe 34 anliegen. Dabei ist es vorteilhaft, wenn die Arretierungs-Ringfläche 38 der Sicherungskappe 34 sowie die freien Enden der Rastarme 28 derart konisch ausgebildet sind, daß die Rastarme 28 in der Sicherungsstellung der Sicherungskappe 34 unter radial nach innen wirkender Vorspannung stehen. Ein Öffnen bzw. ein Trennen der Verbindung ist in der Sicherungsstellung der Sicherungskappe 34 somit vorteilhafterweise ausgeschlossen, so daß auch bei einem eventuellen axialen Zug an den Leitungen 1 die Verbindung sicher aufrechterhalten wird.

Erfindungsgemäß ist die Sicherungskappe 34 mit dem Aufnahmeteil 12 kraftformschlüssig verbunden. Hierdurch wird sichergestellt, daß ein axiales Verschieben der Sicherungskappe 34 in Doppelpfeilrichtung 32 erst ab einer bestimmten Betätigungskraft erfolgen kann, wodurch ein unbeabsichtigtes Verschieben in die Lösestellung und damit ein unbeabsichtigtes Trennen der Verbindung wirksam verhindert wird. Wie dargestellt, weisen das Aufnahmeteil 12 auf seinem Außenumfang sowie die Sicherungskappe 34 zumindest auf einem Teil ihres Innenumfanges umfängliche Rillungen 40 auf, die kraftformschlüssig ineinandergreifen.

Es ist weiterhin vorteilhaft, wenn die Sicherungskappe 34 im Anschluß an die Arretierungs-Ringfläche 38 eine umfängliche, radial nach innen ragende Dichtlippe 42 aufweist, die auf dem eingesteckten Einsteckteil 14 dichtend aufliegt. Die Dichtlippe 42 verhindert wirksam ein Eindringen von Verschmutzungen in den Hohlraum 36.

Zusätzlich zu der Dichtlippe 42, die bereits eine Führung und Zentrierung der Sicherungskappe 34 bewirkt, kann das Aufnahmeteil 12 axial angeordnete, innerhalb des von der Sicherungskappe 34 umschlossenen Hohlraumes 36 an deren Innenfläche anliegende Führungsarme 44 aufweisen. Gemäß Fig. 2 sind erfindungsgemäß vier umfänglich verteilt angeordnete Führungsarme 44 vorgesehen, die im wesentlichen parallel zu den Rastarmen 28 angeordnet sowie ebenfalls einstückig an das Aufnahmeteil 12 angeformt sind.

Gemäß der Erfindung besteht das Aufnahmeteil 12 aus zwei miteinander verbundenen Bauteilen 46, 48, wobei das Bauteil 46 den Anschlußstutzen 4 und das andere Bauteil 48 die Rastmittel 20 aufweist und die Sicherungskappe 34 trägt. Dabei ist von besonderem Vorteil, daß das die Rastmittel 20 und die Sicherungskappe 34 aufweisende Bauteil 48 stets gleich ausgebildet sein kann, während das Bauteil 46 unterschiedlich ausgebildete Anschlußstutzen 4 aufweisen kann. So kann der Anschlußstutzen 4 gemäß Fig. 1 und 3 als Schlauchtülle 52 für Schlauchleitungen, gemäß Fig. 4 als Einschlagdorn 54 für Rohrleitungen aus Kunststoff bzw. Metall oder gemäß Fig. 5 als ringförmige Aufnahme 56 zum Einschweißen von Rohrleitungen ausgebildet sein. Bei der letztgenannten Ausbildung gemäß Fig. 5 erfolgt die Verbindung vorteilhafterweise durch Reibungsschweißen, wobei ein Rohr in die Aufnahme 56 eingeführt und eines der beiden Teile, d.h. entweder das Rohr oder der Anschlußstutzen 4, in Rotation versetzt wird, so daß aufgrund der entstehenden Reibung eine für die Schweißverbindung erforderliche Wärmeentwicklung verursacht wird.

Bei der zweiteiligen Ausbildung des Aufnahmeteils 12 kann vorteilhafterweise zwischen den beiden Bauteilen 46, 48 die Ringnut 22 für den Dichtring 24 gebildet sein.

In den Ausführungsformen gemäß Fig. 1 und 4 sind die beiden Bauteile 46, 48 des Aufnahmeteiles 12 über eine Rastverbindung 57 miteinander verbunden. Hierzu weist das Bauteil 46 eine umlaufende Ringnut auf, in die ein umlaufender Ringsteg des anderen Bauteils 48 einrastet. Alternativ zu dieser Ausbildung ist in der Ausführungsform gemäß Fig. 3 zwischen den Bauteilen 46 und 48 eine Schweißverbindung 58 vorgesehen. Schließlich kann auch - wie in Fig. 5 dargestellt - zwischen den Teilen 46 und 48 eine Gewindeverbindung 60 bestehen, die zusätzlich verklebt sein kann.

Das Aufnahmeteil 12 besteht vorzugsweise aus Kunststoff. Auch die Sicherungskappe 34 besteht aus Kunststoff, der jedoch aufgrund des vorgesehenen Kraftformschlusses elastisch dehnbar sein muß. Das Einsteckteil 14 besteht erfindungsgemäß aus einem einstückigen Rohrstück aus Kunststoff oder Metall, wobei eine Ringwulst 62 des Anschlußstutzens 6, die umfängliche Ringwulst 26 des Steckabschnittes 18 sowie eine vorzugsweise an dem Anschlußstutzen 6 gegenüberliegenden Ende angeordnete Anfasung 64 spanlos durch Stauchung gebildet sind.

Mit der erfindungsgemäßen Verbindungsvorrichtung ist das Verbinden von zwei Leitungen 1 sehr schnell und einfach durchführbar. Die Leitungen 1 sind bereits an den Anschlußstutzen 4, 6 vormontiert. Die Sicherungskappe 34 befindet sich in der in Fig. 4 dargestellten Lösestellung. Das Einsteckteil 14 wird mit seinem Steckabschnitt 18 axial in Pfeilrichtung 66 gemäß Fig. 4 zunächst durch die Dichtlippe 42 hindurch und in die Aufnahme 16 eingesteckt, bis die Rastarme 28 die Ringwulst 26 des Einsteckteiles 14 rastend umgreifen. In dieser Stellung wird die Verbindung bereits durch den Dichtring 24 abgedichtet. Schließlich braucht nur noch die Sicherungskappe 34 axial in die Sicherungsstellung verschoben zu werden, wodurch der in Fig. 1 und 3 dargestellte Zustand erreicht ist und die Verbindung gegen ungewolltes Lösen gesichert ist.

## Patentansprüche

1. Vorrichtung zum gegenseitigen Verbinden von zwei Rohr- und/oder Schlauchleitungen (1), insbesondere von zwei Kraftstoffleitungen, bestehend aus einem Verbindungselement (2) mit zwei Anschlußstutzen (4, 6) zum Aufstecken jeweils einer Leitung (1), wobei das Verbindungselement (2) zweiteilig aus einem Aufnahmeteil (12) und einem Einsteckteil (14) ausgebildet ist und die beiden Teile (12, 14) jeweils einen der beiden Anschlußstutzen (4, 6) sowie das Aufnahmeteil (12) seinem Anschlußstutzen (4) gegenüberliegend eine Aufnahme (16) und das Einsteckteil (14) seinem Anschlußstutzen (6) gegenüberliegend einen Steckabschnitt (18) aufweisen, wobei der Steckabschnitt (18) dichtend in die Aufnahme (16) einsteckbar ist und in der Aufnahme (16) über Rastmittel (20) des Aufnahmeteils (12) und des Einsteckteils (14) lösbar arretiert wird, und wobei die Rastmittel (20) des Aufnahmeteils (12) von axial angeordneten, radial federelastischen, zur Arretierung mit einer verschiebbar auf dem Aufnahmeteil (12) angeordneten Sicherungskappe (34) zusammenwirkenden Rastarmen (28) gebildet sind,
**dadurch gekennzeichnet,** daß das Aufnahmeteil (12) aus zwei miteinander verbundenen Bauteilen (46, 48) besteht, wobei das erste Bauteil (46) den Anschlußstutzen (4) besitzt und das zweite Bauteil (48) die Rastarme (28) aufweist und die Sicherungskappe (34) trägt.

2. Vorrichtung nach Anspruch 1,
**dadurch gekennzeichnet, daß** in einer innerhalb der Aufnahme (16) des Aufnahmeteiles (12) gebildeten Ringnut (22) ein Dichtring (24) angeordnet ist, der auf dem eingesteckten Steckabschnitt (18) des Einsteckteiles (14) umfänglich dichtend aufliegt, wobei die Ringnut (22) vorzugsweise zwischen den beiden Bauteilen (46, 48) des Aufnahmeteils (12) gebildet ist.

3. Vorrichtung nach Anspruch 1 oder 2,
**dadurch gekennzeichnet, daß** die beiden Bauteile (46, 48) des Aufnahmeteiles (12) miteinander verrastet, verschraubt, verklebt und/oder verschweißt sind.

4. Vorrichtung nach einem der Ansprüche 1 bis 3,
**dadurch gekennzeichnet, daß** die Anschlußstutzen (4 bzw. 6) als Schlauchtülle (52) für Schlauchleitungen, als Einschlagdorn (54) für Rohrleitungen und/oder als ringförmige Aufnahme (56) zum Einschweißen von Rohrleitungen ausgebildet sind.

5. Vorrichtung nach einem der Ansprüche 1 bis 4,
**dadurch gekennzeichnet, daß** die Rastmittel (20) des Einsteckteils (14) aus einem am Steckabschnitt (18) gebildeten, umfänglichen Ringwulst (26) bestehen, wobei die Rastarme (28) des Aufnahmeteils (12) an ihren freien Enden den Ringwulst (26) des in die Aufnahme (16) eingesteckten Einsteckteils (14) rastend umgreifende Vertiefungen (30) aufweisen.

6. Vorrichtung nach einem der Ansprüche 1 bis 5,
**dadurch gekennzeichnet, daß** die im wesentlichen hohlzylinderförmige Sicherungskappe (34) des Aufnahmeteils (12) zwischen einer Lösestellung und einer Sicherungsstellung axialverschieblich ist und die Rastarme (28) umfänglich derart umschließt, daß die Rastarme (28) in der Lösestellung innerhalb eines von der Sicherungskappe (34) umschlossenen Hohlraumes (36) radialbeweglich sind und in der Sicherungsstellung mit ihren freien Enden umfänglich an einer sich axial an den Hohlraum (36) anschließenden, im Durchmesser reduzierten Arretierungs-Ringfläche (38) der Sicherungskappe (34) anliegen.

7. Vorrichtung nach Anspruch 6,
**dadurch gekennzeichnet, daß** die Arretierungs-Ringfläche (38) der Sicherungskappe (34) und die freien Enden der Rastarme (28) derart konisch ausgebildet sind, daß die Rastarme (28) in der Sicherungsstellung der Sicherungskappe (34) unter radial nach innen wirkender Vorspannung stehen.

8. Vorrichtung nach Anspruch 6 oder 7,
**dadurch gekennzeichnet, daß** das Aufnahmeteil (12) auf seinem Außenumfang sowie die Sicherungskappe (34) zumindest auf einem Teil ihres Innenumfanges umfängliche Rillungen (40) aufweisen, die kraftformschlüssig ineinandergreifen.

9. Vorrichtung nach einem der Ansprüche 6 bis 8,
**dadurch gekennzeichnet, daß** die Sicherungskappe (34) im Anschluß an die Arretierungs-Ringfläche (38) eine umfängliche, radial nach innen ragende Dichtlippe (42) aufweist, die auf dem eingesteckten Einsteckteil (14) dichtend aufliegt.

10. Vorrichtung nach einem der Ansprüche 6 bis 9,
**dadurch gekennzeichnet, daß** das Aufnahmeteil (12) axial angeordnete, innerhalb des von der Sicherungskappe (34) umschlossenen Hohlraumes (36) an deren Innenfläche anliegende Führungsarme (44) aufweist.

11. Vorrichtung nach einem der Ansprüche 1 bis 10,
**dadurch gekennzeichnet, daß** das Einsteckteil (14) aus einem einstückigen Rohrstück aus Kunststoff oder Metall besteht, wobei ein Ringwulst (62) des Anschlußstutzens (6), der umfängliche Ringwulst (26) des Steckabschnittes (18) sowie eine vorzugsweise am dem Anschlußstutzen (6) gegenüberliegenden Ende angeordnete Anfasung (64) spanlos durch Stauchung gebildet sind.

## Claims

1. Means for mutually connecting two pipelines and/or hose lines (1), in particular two fuel lines, comprising a connection element (2) having two connecting fittings (4, 6) on which to fit a respective line (1), the connection element (2) being constructed in two parts, a receiving part (12) and an insertion part (14), and the two parts (12, 14) having a respective one of the two connecting fittings (4, 6), and the receiving part (12) having a receiver (16) opposite its connecting fitting (4), and the insertion part (14) having a plug-in section (18) opposite its connecting fitting (6), the plug-in section (18) being insertable in sealing manner in the receiver (16) and being detachably locked in the receiver (16) by way of latching means (20) of the receiving part (12) and of the insertion part (14), and the latching means (20) of the receiving part (12) being formed from axially arranged, radially resilient latching arms (28) which, for the purpose of locking, cooperate with a securing cap (34) arranged displaceably on the receiving part (12), characterized in that the receiving part (12) comprises two mutually connected structural parts (46, 48), the first structural part (46) having the connecting fitting (4) and the second structural part (48) having the latching arms (28) and bearing the securing cap (34).

2. Means according to Claim 1, characterized in that there is arranged in an annular groove (22) formed within the receiver (16) of the receiving part (12) a sealing ring (24) which bears in peripherally sealing manner against the inserted plug-in section (18) of the insertion part (14), the annular groove (22) preferably being formed between the two structural parts (46, 48) of the receiving part (12).

3. Means according to Claim 1 or 2, characterized in that the two structural parts (46, 48) of the receiving part (12) are latched, screwed, stuck and/or welded to one another.

4. Means according to one of Claims 1 to 3, characterized in that the connecting fittings (4 and 6) are constructed as the hose nozzle (52) for hose lines, as a drive-in mandrel (54) for pipelines and/or as an annular receiver (56) in which to weld pipelines.

5. Means according to one of Claims 1 to 4, characterized in that the latching means (20) of the insertion part (14) comprise a peripheral annular bead (26) formed on the plug-in section (18), the latching arms (28) of the receiving part (12) having at their free ends depressions (30) which surround in latching manner the annular bead (26) of the insertion part (14) inserted in the receiver (16).

6. Means according to one of Claims 1 to 5, characterized in that the substantially hollow-cylindrical securing cap (34) of the receiving part (12) is axially displaceable between a detached position and a securing position and peripherally encloses the latching arms (28) such that the latching arms (28) are radially movable in the detached position within a hollow space (36) enclosed by the securing cap (34), and in the securing position bear peripherally by means of their free ends against an annular locking surface (38), which is reduced in diameter and axially adjoins the hollow space (36), of the securing cap (34).

7. Means according to Claim 6, characterized in that the annular locking surface (38) of the securing cap (34) and the free ends of the latching arms (28) are constructed to be conical such that the latching arms (28) are under radially inwardly acting pre-tension in the securing position of the securing cap (34).

8. Means according to Claim 6 or 7, characterized in that the receiving part (12) had on its outer periphery, and the securing cap (34) has at least on part of its inner periphery, peripheral grooves (40) which engage positively and non-positively in one another.

9. Means according to one of Claims 6 to 8, characterized in that the securing cap (34) has, adjoining the annular locking surface (38), a peripheral, radially inwardly projecting sealing lip (42) which bears in sealing manner against the inserted insertion part (14).

10. Means according to one of Claims 6 to 9, characterized in that the receiving part (12) has axially arranged guide arms (44) which within the hollow space (36) enclosed by the securing cap (34) bear against the inner surface of the securing cap (34).

11. Means according to one of Claims 1 to 10, characterized in that the insertion part (14) comprises a one-piece pipe section of plastics or metal, an annular bead (62) of the connecting fitting (6), the peripheral annular bead (26) of the plug-in section (18), and a chamfer (64) which is preferably arranged on the end opposite the connecting fitting (6), being formed in non-cutting manner by upsetting.

## Revendications

1. Dispositif pour l'accouplement de deux conduites tubulaires et/ou flexibles (1), en particulier de deux conduites de carburant, consistant en un élément d'accouplement (2) avec deux manchons de raccordement (4, 6) pour y emmancher respectivement une conduite (1), l'élément de connexion (2) étant forme en deux parties : par un élément de réception (12) et par un élément d'introduction (14), les deux éléments (12, 14) comportant respectivement un des deux manchons de raccordement (4, 6) et l'élément de réception (12) comportant, à l'opposé de son manchon de raccordement (4), un logement (16) et l'élément d'introduction (14), à l'opposé de son manchon de connexion (6), une portion d'introduction (18), cette portion (18) pouvant être introduite de manière étanche dans le logement (16) et être bloquée de manière desserrable dans le logement (16) par des moyens d'arrêt (20) de l'élément de réception (12) et de l'élément d'introduction (14), les moyens d'arrêt (20) de l'élément de réception (12) étant formés par des bras d'arrêt (28), disposés axialement et radialement élastiques et coopérant, pour obtenir ledit blocage, avec un capuchon de sécurité (34) disposé sur l'élément de réception (12),
caractérisé par le fait que l'élément de réception (12) est formé par deux pièces (46, 48) reliées entre elles, la première (46) comportant le manchon de raccordement (4) et la deuxième (48), les bras d'arrêt (28) et portant en outre le capuchon de sécurité (34).

2. Dispositif selon la revendication 1,
caractérisé par le fait que, dans une rainure annulaire (22), formée à l'intérieur du logement (16) de l'élément de réception (12), est disposée une bague d'étanchéité (24) appliquée avec une étanchéité circonférentielle sur la portion d'introduction (18) insérée de l'élément d'introduction (14), la rainure annulaire (22) étant de préférence constituée entre les deux pièces (46, 48) de l'élément de réception (12).

3. Dispositif selon la revendication 1 ou 2,
caractérisé par le fait que les deux pièces (46, 48) de l'élément de réception (12) sont encliquetées, vissées, collées et/ou soudées entre elles.

4. Dispositif selon l'une des revendications 1 à 3,
caractérisé par le fait que les manchons de raccordement (4, respectivement 6) ont la forme d'un embout à olive (52) pour tuyaux flexibles, d'une cheville à enfoncer (54) pour conduites tubulaires et/ou d'un logement annulaire (56) pour y raccorder par soudure des conduites tubulaires.

5. Dispositif selon l'une des revendications 1 à 4,
caractérisé par le fait que les moyens d'arrêt (20) de l'élément d'introduction (14) consistent en un bourrelet annulaire circonférentiel (26) formé sur la portion d'introduction (18), les bras d'arrêt (28) de l'élément de réception (12) comportant à leurs extrémités libres des évidements (30) entourant de manière à le bloquer le bourrelet annulaire (26) de l'élément d'introduction (14) insérée.

6. Dispositif selon l'une des revendications 1 à 5,
caractérisé par le fait que le capuchon de sécurité (34) de l'élément de réception (12), qui a sensiblement la forme d'un cylindre creux, peut être déplacé axialement entre une position desserrée et une position de sécurité et entoure les bras d'arrêt (28) circonférentiellement de manière à ce que, dans la position desserrée, les bras d'arrêt (28) soient mobiles radialement dans un espace creux (36) entouré par le capuchon de sécurité (34) et que, dans la position de sécurité, leurs extrémités libres soient circonférentiellement appliquées sur une surface annulaire d'arrêt (38) de diamètre réduit du capuchon de sécurité (34), faisant suite axialement à l'espace creux (36).

7. Dispositif selon la revendication 6,
caractérisé par le fait que la surface annulaire d'arrêt (38) du capuchon de sécurité (34) et les extrémités libres des bras d'arrêt (28) ont une forme conique telle que les bras d'arrêt (28) soient, dans la position de sécurité du capuchon de sécurité (34), soumis à une précontrainte agissant radialement vers l'intérieur.

8. Dispositif selon la revendication 6 ou 7,
caractérisé par le fait que l'élément de réception (12) présente sur sa circonférence extérieure et le capuchon de sécurité (34) présente au moins sur une partie de sa circonférence intérieure, des cannelures circonférentielles (40) qui s'emboîtent mécaniquement et par l'exercice d'une force.

9. Dispositif selon l'une des revendications 6 à 8,
caractérisé par le fait que le capuchon de sécurité (34) présente, à la suite de la surface annulaire d'arrêt (38), une lèvre d'étanchéité (42) circonférentielle qui fait saillie vers l'intérieur et est appliquée de manière étanche sur l'élément d'introduction (14) inséré.

10. Dispositif selon l'une des revendications 6 à 9,
caractérisé par le fait que l'élément de réception (12) présente des bras de guidage (44) disposés axialement et appliqués, à l'intérieur de l'espace creux (36) entouré par le capuchon de sécurité (34), sur la face intérieure de celui-ci.

11. Dispositif selon l'une des revendications 1 à 10,
caractérisé par le fait que l'élément d'introduction (14) est constitué par une portion de tuyau d'une pièce, réalisée en une matière synthétique ou en métal, un bourrelet annulaire (62) du manchon de raccordement (6), le bourrelet annulaire circonférentiel (26) de la portion d'introduction (18), ainsi qu'un chanfreinage (64), disposé de préférence sur l'extrémité opposée au manchon de raccordement (6), étant formés par refoulement.
